# EUROPÄISCHE PATENTSCHRIFT

(11) **EP 3 610 171 B1**
(45) Veröffentlichungstag und Bekanntmachung des Hinweises auf die Patenterteilung: **24.02.2021**
(21) Anmeldenummer: 18717309.1
(22) Anmeldetag: 06.04.2018
(51) Int. Cl.: F16D 69/00

(54) **REIBBELAGKÖRPER**
FRICTION PAD BODY
CORPS DE GARNITURE DE FRICTION

(30) Priorität: 10.04.2017 DE 102017107621
(43) Veröffentlichungstag der Anmeldung: 19.02.2020
(73) Patentinhaber: Fischer, Erika, 73235 Weilheim (DE)
(72) Erfinder: Fischer, Erika, 73235 Weilheim (DE)
(74) Vertreter: Rüger Abel Patentanwälte PartGmbB
(86) Internationale Anmeldenummer: PCT/EP2018/058879
(87) Internationale Veröffentlichungsnummer: WO 2018/189054

(56) Entgegenhaltungen:
- EP-A2- 0 745 781
- WO-A1-2010/015897
- WO-A1-2015/173768
- DE-T2- 60 200 140

## Beschreibung

Die Erfindung betrifft einen Reibbelagkörper zur Verwendung in einer Reibungsbremse. Der Reibbelagkörper kann auch als Bremsklotz bezeichnet werden.

Reibbelagkörper für Reibungsbremsen sind bekannt. Beispielsweise beschreibt die DE 38 03 069 A1 einen Reibbelagkörper für eine Scheibenbremse. Der Reibbelagkörper weist eine Trägerplatte auf, die einen Reibbelag trägt. Typischerweise besteht die Trägerplatte aus Metall, beispielsweise aus Stahl. Der Bremsbelag besteht aus einem Material, das im Hinblick auf die Reibpaarung mit einer Bremsscheibe geeignet ist. Um ein Oxidieren der Trägerplatte durch den Kontakt mit dem Bremssattel zu vermeiden, wird vorgeschlagen, eine entsprechende Metallschicht an der Trägerplatte vorzusehen, um Kontaktkorrosion mit dem Material des Bremssattels zu vermeiden.

DE 103 58 320 A1 schlägt vor, einen Reibbelag stoffschlüssig und formschlüssig mit einem Träger zu verbinden. Dabei sind Verstärkungsfasern vorgesehen, die die Grenzschicht zwischen dem Träger und dem Reibbelag durchdringen. Beispielsweise sollen durch Vernadeln die im Reibbelag vorhandenen Verstärkungsfasern in die Schicht des Trägers eindringen und dort zusätzlich einen Formschluss zwischen den Schichten des Trägers und des Reibbelags bewirken.

WO 2010/015897 A1 offenbart einen Reibbelagkörper gemäß dem Oberbegriff des Patentanspruches 1. Der Reibbelagkörper wird aus Keramik durch Tempern eines Grünkörpers hergestellt.

EP 0 745 781 A2 beschreibt einen Reibbelagkörper, bei dem eine Reibbelagmischung extrudiert und anschließend durch Tempern ausgehärtet wird. Schließlich wird der Reibbelagkörper durch Schleifen in die gewünschte Form gebracht.

DE 602 00 140 T2 offenbart einen Reibbelagkörper, bei dem ein Bremsbelag und eine Trägerplatte aus demselben Material hergestellt werden können.

Der aus WO 2015/173768 A1 bekannte Reibbelagkörper besteht aus einem duromeren Harz oder Phenolharz.

Ausgehend hiervon kann es als Aufgabe der vorliegenden Erfindung angesehen werden, einen Reibbelagkörper zu schaffen, der sich sehr einfach herstellen lässt und gleichzeitig die mechanischen und thermischen Anforderungen beim Einsatz in einer Reibungsbremse erfüllt.

Diese Aufgabe wird durch einen Reibbelagkörper mit den Merkmalen des Patentanspruches 1 gelöst.

Der Reibbelagkörper weist ein Trägerteil und einen Reibteil auf, die integral ohne Naht- und Fügestelle aus demselben Keramikmaterial bestehen. Zwischen dem Trägerteil und dem Reibteil ist keine Übergangsfläche oder Übergangszone vorhanden. Das Keramikmaterial aus dem der Reibbelagkörper besteht bildet keine Trennschicht oder Fügeschicht zwischen dem Trägerteil und dem Reibteil. Insbesondere wird der Reibbelagkörper durch Sintern hergestellt, so dass er einen Sinterkörper bildet. Erfindungsgemäß ist der Reibbelagkörper ein isostatisch gepresster Sinterkörper.

Dadurch, dass der Trägerteil und der Reibteil des Reibbelagkörpers integral ausgeführt sind, entstehen durch die Erwärmung beim Bremsen keine Verspannungen aufgrund von unterschiedlichen Wärmeausdehnungskoeffizienten. Eine Kontaktkorrosion beim Einsetzen des keramischen Reibbelagkörpers in einen Bremssattel, wie dies bei metallischen Trägerteilen im Stand der Technik der Fall ist, entfällt.

Das Keramikmaterial weist vorzugsweise eine Reinheit von mindestens 75% oder mindestens 85% oder mindestens 95% auf.

Der Reibbelagkörper besteht insbesondere aus einem hochverdichteten Sinterkeramikmaterial. Das Keramikmaterial weist vorzugsweise eine Dichte von etwa 3 bis 6 g/cm³ auf.

Das Keramikmaterial weist für die Aufgabe eines Reibbelagkörpers gute mechanische und thermische Eigenschaften auf. Der Reibbelagkörper lässt sich durch Zugabe von färbenden Substanzen beim Sintern auch farbig herstellen, ohne dass ein Lackieren erforderlich wäre. Es lassen sich präzise geometrische Formen auf einfache Weise durch Pressen und Sintern erreichen.

Alternativ zu der Herstellung des Reibbelagkörpers aus einem Sinterkeramikmaterial könnte dieser auch aus einem Reaktionskeramikmaterial hergestellt werden.

Vorzugsweise wird als Keramikmaterial ein Oxidkeramikmaterial verwendet, wie beispielsweise Aluminiumoxid. Mit Aluminiumoxid lassen sich abhängig von der Werkstoffpaarung relativ hohe Gleitreibungszahlen im Bereich von etwa 0,4 bis 0,7 erreichen.

Es können auch Nicht-Oxidkeramikmaterialien verwendet werden, beispielsweise Aluminiumnitrit, Siliziumcarbid, Siliziumnitrit, Bornitrit oder Borcarbid. Die Verwendung von Aluminiumoxid und Siliziumcarbid hat den Vorteil, dass diese Materialien einen geringen Wärmeausdehnungskoeffizienten aufweisen, wenn während des Bremsvorgangs der Reibbelag erwärmt wird.

Bei einer einfachen Ausführung des Reibbelagkörpers sind vorzugsweise keine Verstärkungsfasern vorhanden. Dies vereinfacht die Herstellung. In Abwandlung hierzu ist es auch möglich, Verstärkungsfasern, insbesondere Kohlefasern, in dem Keramikmaterial des Reibbelagkörpers anzuordnen. Dadurch kann die Scherfestigkeit erhöht werden. Außerdem kann über Kohlefasern die Wärmeleitfähigkeit verbessert und eine gleichmäßigere Wärmeverteilung innerhalb des Reibbelagkörpers erreicht werden.

Der Trägerteil weist bei einem Ausführungsbeispiel einen Befestigungsabschnitt auf, der seitlich über den Reibteil hinausragt. In diesem Befestigungsabschnitt kann wenigstens eine Befestigungsaussparung zum Befestigen des Reibbelagkörpers an einem Bremssattel oder an einem anderen Halteteil vorhanden sein.

Vorteilhafte Ausgestaltungen der Erfindung ergeben sich aus den abhängigen Patentansprüchen, der Beschreibung und der Zeichnung. Nachfolgend werden bevorzugte Ausführungsbeispiele eines Reibbelagkörpers anhand der beigefügten Zeichnungen im Einzelnen erläutert. Es zeigen:

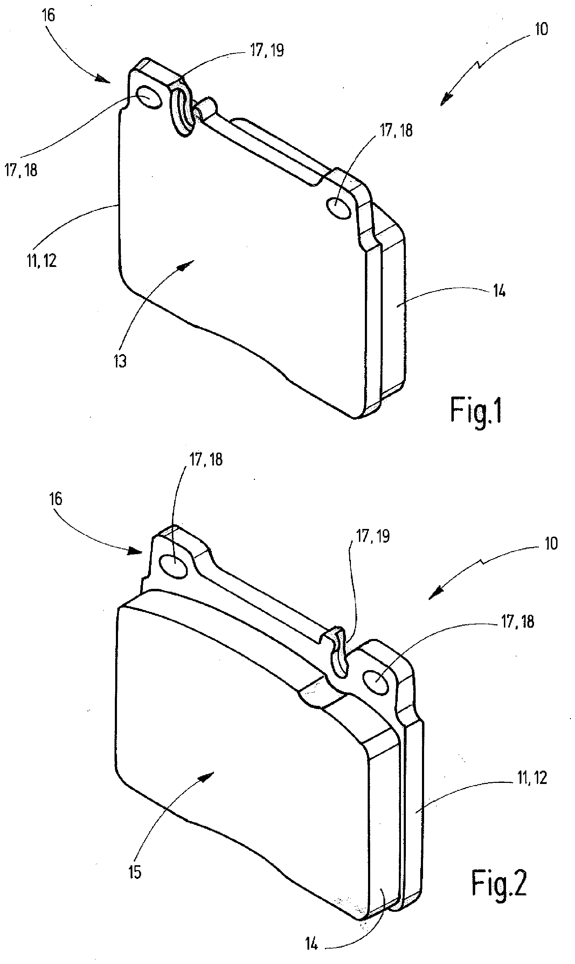

Fig. 1 ein Ausführungsbeispiel eines Reibbelagkörpers in einer perspektivischen Ansicht mit Blick auf den Trägerteil,
Fig. 2 den Reibbelagkörper aus Fig. 1 in einer perspektivischen Ansicht mit Blick auf den Reibteil,

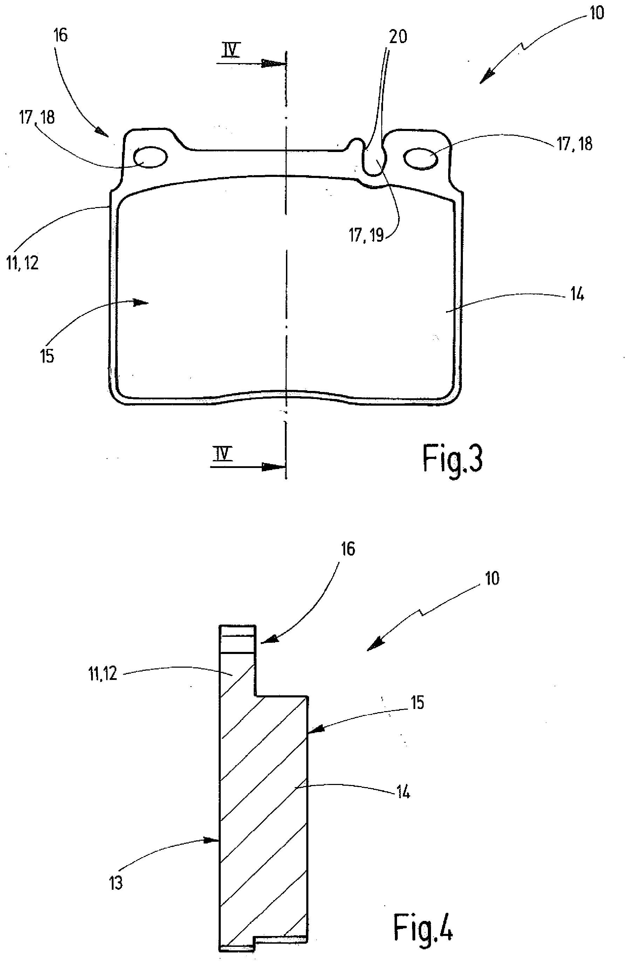

Fig. 3 den Reibbelagkörper gemäß der Fig. 1 und 2 in einer Draufsicht auf den Reibteil und
Fig. 4 einen Querschnitt durch den Reibbelagkörper gemäß der Schnittlinie IV-IV in Fig. 3

In den Figuren ist ein Ausführungsbeispiel eines Reibbelagkörpers 10 veranschaulicht, der zur Verwendung in einer Reibungsbremse dient. Der Reibbelagkörper 10 kann daher auch als Bremsklotz bezeichnet werden. Der Reibbelagkörper 10 hat einen Trägerteil 11, der beim Ausführungsbeispiel als Trägerplatte 12 ausgeführt ist. Die Trägerplatte 12 hat eine im Wesentlichen ebene Rückfläche 13. Auf der der Rückfläche 13 entgegengesetzten Seite hat der Reibbelagkörper einen Reibteil 14. Der Reibteil 14 weist auf seiner dem Trägerteil 11 entgegengesetzten Seite eine Reibfläche 15 auf, die dazu dient, mit einem Bremsenbestandteil zur Erzeugung einer Reibungskraft während eines Bremsvorganges in Anlage gebracht zu werden. Der Reibteil 14 hat rechtwinklig zu seiner Reibfläche 15 betrachtet eine konstante Dicke. Er kann eine in etwa quaderförmige oder quaderähnliche Kontur aufweisen. Der Reibteil kann zur Anpassung an die Kontur einer Bremsscheibe auch bogenförmig gekrümmt sein.

Der Trägerteil 11 und beispielsgemäß die Trägerplatte 12 ragt seitlich, in einer Richtung parallel zur Reibfläche bzw. zur Rückfläche 13 über den Reibteil 14 hinaus. In diesem Bereich weist der Trägerteil 11 einen Befestigungsabschnitt 16 auf. In dem Befestigungsabschnitt 16 hat der Trägerteil 11 bzw. die Trägerplatte 12 eine oder mehrere Befestigungsaussparungen 17. Beispielsgemäß sind zwei Befestigungsaussparungen 17 als Löcher 18 ausgeführt.

Eine weitere Befestigungsaussparung 17 ist seitlich offen und somit als offene Aussparung 19 ausgeführt. Die offene Aussparung 19 kann wenigstens einen und beispielsgemäß zwei sich gegenüberliegende Rastvorsprünge 20 aufweisen, wodurch an der Stelle des wenigstens einen Rastvorsprungs 20 der Querschnitt der offenen Aussparung 19 verringert wird. Dadurch kann ein Kraftschluss und/oder Formschluss mit einem in die Aussparung 19 eingreifenden Zapfen hergestellt werden.

Der Reibbelagkörper 10 besteht aus einem integral hergestellten Körper ohne Naht- und Fügestelle. Insbesondere ist zwischen dem Trägerteil 11 und dem Reibteil 14 keine Grenzfläche, Trennfläche oder Fügefläche vorhanden. Der Reibbelagkörper ist aus einem Keramikmaterial hergestellt. Das Keramikmaterial weist vorzugsweise eine Reinheit von wenigstens 80 bis 85% oder wenigstens 90 bis 95% auf. Das Keramikmaterial ist beim Ausführungsbeispiel eine Oxidkeramik, beispielsweise Aluminiumoxid. Bei dem Keramikmaterial kann es sich alternativ aber auch um eine Nicht-Oxidkeramik handeln, wie etwa ein Carbid oder ein Nitrit, beispielsweise Aluminiumnitrit, Bornitrit, Siliziumnitrit, Siliziumcarbid oder Borcarbid.

Der Reibbelagkörper 10 besteht vorzugsweise aus einem Sinterkeramikmaterial. Der Reibbelagkörper 10 ist als isostatisch gepresster und vorzugsweise hochverdichteter Sinterkörper hergestellt. Die Herstellung des Reibbelagkörpers 10 erfolgt beispielsgemäß in einem einstufigen Press- und Sintervorgang. Eine spanende Bearbeitung zur Herstellung der Befestigungsaussparungen 17 entfällt. Ebenso ist keine Nachbearbeitung zur Herstellung der Verbindung zwischen dem Reibteil 14 und dem Trägerteil 11 erforderlich.

Zusätzlich zu dem Keramikmaterial können Zusätze, wie etwa Verstärkungsfasern in das Keramikmaterial eingebracht werden. Bei einem Ausführungsbeispiel sind als Verstärkungsfasern Kohlefasern in das Keramikmaterial eingelagert, wodurch die mechanische Stabilität und die Wärmeleitfähigkeit verbessert werden können. Der Anteil derartiger Zusätze bezogen auf das Gewicht des Reibbelagkörpers 10 beträgt maximal 5% oder maximal 10% oder maximal 15% oder maximal 25%.

Das Keramikmaterial kann - abgesehen von Verunreinigungen - auch frei sein von Zusätzen, insbesondere Verstärkungsfasern.

Die chemischen und/oder mechanischen und/oder physikalischen Eigenschaften des Reibteils 14 sind identisch mit denen des Trägerteils 11. Bei der Herstellung wird für beide Teile 11, 14 dasselbe Keramikmaterial mit oder ohne Zusätze verwendet.

Der Reibbelagkörper weist isotrope Eigenschaften auf. Insbesondere durch das isostatische Pressen bzw. heißisostatische Pressen entsteht eine Porosität, die vorteilhaft für die Verwendung in einer Reibungsbremse ist.

Die Erfindung betrifft einen Reibbelagkörper 10 mit einem Trägerteil 11 und einem Reibteil 14, die integral, ohne Naht- und Fügestelle aus demselben Keramikmaterial bestehen. Das Keramikmaterial weist eine Reinheit von mindestens 75% bis 80% auf. Der Reibbelagkörper wird durch isostatisches Pressen in Form eines Sinterkörpers hergestellt, so dass sich ein einstufiger Herstellungsprozess erreichen lässt.

### Bezugszeichenliste:

- 10: Reibbelagkörper
- 11: Trägerteil
- 12: Trägerplatte
- 13: Rückfläche
- 14: Reibteil
- 15: Reibfläche
- 16: Befestigungsabschnitt
- 17: Befestigungsaussparung
- 18: Loch
- 19: offene Aussparung
- 20: Rastvorsprung

## Patentansprüche

1. Reibbelagkörper (10)
mit einem Trägerteil (11) und einem Reibteil (14), die integral ohne Naht- und Fügestelle aus demselben Keramikmaterial bestehen
**dadurch gekennzeichnet, dass** der Reibbelagkörper (10) ein isostatisch gepresster Sinterkörper ist.

2. Reibbelagkörper nach Anspruch 1,
**dadurch gekennzeichnet, dass** der Trägerteil (11) zumindest an einem Befestigungsabschnitt (16) seitlich über den Reibteil (14) hinausragt.

3. Reibbelagkörper nach Anspruch 2,
**dadurch gekennzeichnet, dass** in Befestigungsabschnitt (16) wenigstens eine Befestigungsaussparung (17) vorhanden ist.

4. Reibbelagkörper nach einem der vorhergehenden Ansprüche,
**dadurch gekennzeichnet, dass** das Keramikmaterial als Oxidkeramik oder Nicht-Oxidkeramik ausgeführt ist.

5. Reibbelagkörper nach einem der vorhergehenden Ansprüche,
**dadurch gekennzeichnet, dass** als Keramikmaterial Aluminiumoxid oder Aluminiumnitrid oder Siliciumcarbid oder Siliciumnitrid oder Bornitrid oder Borcarbid verwendet wird.

6. Reibbelagkörper nach einem der vorhergehenden Ansprüche,
**dadurch gekennzeichnet, dass** das Keramikmaterial frei ist von Verstärkungsfasern.

7. Reibbelagkörper nach einem der Ansprüche 1 bis 5,
**dadurch gekennzeichnet, dass** das Keramikmaterial Verstärkungsfasern aufweist.

8. Reibbelagkörper nach Anspruch 7,
**dadurch gekennzeichnet, dass** die Verstärkungsfasern durch Kohlenstofffasern gebildet sind.

9. Reibbelagkörper nach einem der vorhergehenden Ansprüche,
**dadurch gekennzeichnet, dass** das Kermikmaterial ein Sinterkeramikmaterial ist.

10. Reibbelagkörper nach einem der vorhergehenden Ansprüche,
**dadurch gekennzeichnet, dass** er in einem einstufigen Herstellungsprozess hergestellt ist.

## Claims

1. Friction pad body (10), with a carrier part (11) and a friction part (14) which consist integrally of the same ceramic material with no seam or joining point, **characterised in that** the friction pad body (10) is an isostatically pressed sintered body.

2. Friction pad body according to claim 1, **characterised in that** the carrier part (11) protrudes laterally beyond the friction part (14) at least at a fixing portion (16).

3. Friction pad body according to claim 2, **characterised in that** at least one fixing recess (17) is provided in the fixing portion (16).

4. Friction pad body according to any of the preceding claims, **characterised in that** the ceramic material is designed as oxide ceramic or non-oxide ceramic.

5. Friction pad body according to any of the preceding claims, **characterised in that** as a ceramic material, aluminium oxide or aluminium nitride, or silicon carbide or silicon nitride, or boron nitride or boron carbide is used.

6. Friction pad body according to any of the preceding claims, **characterised in that** the ceramic material is free from reinforcing fibres.

7. Friction pad body according to any of claims 1 to 5, **characterised in that** the ceramic material comprises reinforcing fibres.

8. Friction pad body according to claim 7, **characterised in that** the reinforcing fibres are formed by carbon fibres.

9. Friction pad body according to any of the preceding claims, **characterised in that** the ceramic material is a sintered ceramic material.

10. Friction pad body according to any of the preceding claims, **characterised in that** it is produced in a single stage production process.

## Revendications

1. Corps de garniture de friction (10),
comprenant un élément de support (11) et un élément de friction (14), qui sont réalisés d'une seule pièce, sans point de jonction ni d'assemblage, à partir du même matériau céramique,
**caractérisé en ce que** le corps de garniture de friction (10) est un corps fritté réalisé par compression isostatique.

2. Corps de garniture de friction selon la revendication 1, **caractérisé en ce que** l'élément de support (11) dépasse latéralement par rapport à l'élément de friction (14), au moins dans une zone de fixation (16).

3. Corps de garniture de friction selon la revendication 2, **caractérisé en ce qu'**au moins un évidement de fixation (17) est prévu dans la zone de fixation (16).

4. Corps de garniture de friction selon l'une des revendications précédentes, **caractérisé en ce que** le matériau céramique est réalisé sous forme de céramique oxyde ou de céramique non-oxyde.

5. Corps de garniture de friction selon l'une des revendications précédentes, **caractérisé en ce que** le matériau céramique utilisé est de l'oxyde d'aluminium ou du nitrure d'aluminium ou du carbure de silicium ou du nitrure de silicium ou du nitrure de bore ou du carbure de bore.

6. Corps de garniture de friction selon l'une des revendications précédentes, **caractérisé en ce que** le matériau céramique est exempt de fibres de renfort.

7. Corps de garniture de friction selon l'une des revendications 1 à 5, **caractérisé en ce que** le matériau céramique présente des fibres de renfort.

8. Corps de garniture de friction selon la revendication 7, **caractérisé en ce que** les fibres de renfort sont constituées de fibres de carbone.

9. Corps de garniture de friction selon l'une des revendications précédentes, **caractérisé en ce que** le matériau céramique est un matériau céramique fritté.

10. Corps de garniture de friction selon l'une des revendications précédentes, **caractérisé en ce qu'**il est réalisé au cours d'un processus de fabrication en une seule étape.
